# EUROPÄISCHE PATENTSCHRIFT

(11) **EP 3 611 413 B1**
(45) Veröffentlichungstag und Bekanntmachung des Hinweises auf die Patenterteilung: **14.04.2021**
(21) Anmeldenummer: 19190168.5
(22) Anmeldetag: 06.08.2019
(51) Int. Cl.: F16K 27/02, F01N 3/20, F16K 31/06

(54) **VENTIL MIT EISDRUCKKOMPENSATION**
VALVE WITH ICE PRESSURE COMPENSATION
COMPENSATION DE LA PRESSION DE GLACE DANS UNE SOUPAPE

(30) Priorität: 17.08.2018 DE 102018120080
(43) Veröffentlichungstag der Anmeldung: 19.02.2020
(73) Patentinhaber: Thomas Magnete GmbH, 57562 Herdorf (DE)
(72) Erfinder: Dietz, Janik, 56472 Hof (DE); Ginsberg, Benjamin, 56479 Liebenscheid (DE); Jung, David, 57290 Neunkirchen (DE); Meinung, Lukas, 57518 Betzdorf (DE); Petri, Wolfgang, 57290 Neunkirchen (DE); Schneider, Michel, 57586 Weitefeld (DE)

(56) Entgegenhaltungen:
- WO-A1-2010/051823
- DE-A1- 10 147 172
- DE-A1-102004 025 062
- DE-A1-102010 019 821
- DE-A1-102010 039 052
- DE-B3-102011 111 938

## Beschreibung

### Beschreibung

Die Erfindung beruht auf einem Ventil, das einen Elektromagneten, einen Einlass, einen Auslass, ein Gehäuse und ein von einem Anker des Elektromagneten mechanisch betätigtes Fluidsteuermittel aufweist, wobei das Fluidsteuermittel einen ersten, mit dem Einlass fluidisch verbundenen ersten Druckraum mit einem zweiten, mit dem Auslass fluidisch verbundenen Druckraum in Abhängigkeit von der Betätigung durch den Anker des Elektromagneten fluidisch verbindet, und wobei der Elektromagnet einen dritten Druckraum aufweist.

Ventile dieser Gattung sind bekannt und werden zur Steuerung des Durchflusses von Gasen und/oder Flüssigkeiten eingesetzt.

Besondere Anforderungen werden an solche Ventile gestellt, die mit Flüssigkeiten zusammenwirken, die unter den bestimmungsgemäßen Betriebsbedingungen einfrieren können und dabei eine Vergrößerung ihres Volumens zeigen.

Solche Ventile müssen gegen die Wirkung dieser Volumenvergrößerung bei gleichzeitigem Leitungsverschluss geschützt werden.

Die Druckschrift DE 20 2013 011 667 zeigt eine Dosierpumpe mit einer Schutzeinrichtung zum Einsatz mit einfrierenden Flüssigkeiten.

Die WO 2010/051 823 A1 offenbart ein frostsicheres Magnetventil. Das Magnetventil umfasst ein Ankerrohr innerhalb einer Spulenanordnung, eine Ankerhülse, ein in dem Ankerrohr angeordnetes Polstück und einen Anker, der so konfiguriert ist, dass er sich innerhalb der in dem Ankerrohr angeordneten Ankerhülse hin- und herbewegt. Der Anker ist so konfiguriert, dass er sich in der Ankerhülse unter dem Einfluss der Spulenanordnung zu einem Ventilsitz hin und von diesem weg bewegt.

Die DE 101 47 172 A1 offenbart eine Reduktionsmittelpumpe für eine Abgasnachbehandlungsanlage einer Brennkraftmaschine. Das den Pumpenkörper der Reduktionsmittelpumpe an seinen Enden abschließende Pumpeneinlassteil und/oder das Pumpenauslassteil ist zweiteilig ausgeführt, wobei jeweils ein Teil des Pumpeneinlassteils und/oder des Pumpenauslassteils mittels eines Federelementes gegenüber dem anderen Teil vorgespannt ist, so dass bei Überschreiten eines durch die Federkraft des Federelementes vorgegebenen Druckes eine Relativbewegung zwischen den beiden Teilen ausgeführt werden kann. Damit kann eine Volumenzunahme des sich innerhalb des Pumpenkörpers befindlichen Reduktionsmittels infolge Einfrieren aufgenommen und damit eine Beschädigung der Reduktionsmittelpumpe verhindert werder

Es ist Aufgabe der vorliegenden Erfindung, einen sicheren Schutz des Ventils vor der Wirkung der Volumenvergrößerung infolge eines Einfrierens des Fluids zu erzeugen, der nicht nur einmalig wirkt, sondern eine in einer Spezifikation festgelegte Anzahl (beispielsweise >30) von Einfrierzyklen übersteht.

Die Lösung dieser Aufgabe erfolgt durch die kennzeichnenden Merkmale des ersten Anspruchs.

Die Erfindung schließt die technische Lehre ein, dass der dritte Druckraum zylindrisch ist und innen an der Zylinderfläche mit einer Membran ausgekleidet ist, die von einer Abstützung mindestens teilweise umfasst ist, wobei die Abstützung in dem Gehäuse gelagert ist, und wobei die Abstützung an seiner der Membran zugewandten Oberfläche Vertiefungen aufweist, die von der Membran (9) druckabhängig elastisch ausfüllbar sind.

Der Elektromagnet weist einen mit dem Anker magnetisch zusammenwirkenden Magnetpol auf, der von einem ersten Federmittel axial abgestützt ist, wobei der Magnetpol durch einen Druck in dem dritten Druckraum, der größer ist als ein erster Grenzdruck p_{g}, gegen die Kraft des ersten Federmittels in die Richtung des ersten Federmittels verschiebbar ist.

Der Magnetpol und das erste Federmittel sind so bemessen, dass das Federmittel sich unter dem Einfluss des maximalen Innendrucks nur elastisch verformt.

Der erste Grenzdruck p_{g} ist durch die Federkraft des ersten Federmittels so vorbestimmt, dass im bestimmungsgemäßen Betrieb ohne Einfrieren des Fluids der Magnetpol in seiner durch die Federkraft bestimmten Ruhelage verbleibt und dass nur bei einem Einfrieren des Fluids der dann auftretende außergewöhnlich hohe Druck die Kraft der Feder überwinden kann.

Dabei ist das erste Federmittel vorteilhafterweise an dem Gehäuse abgestützt, und ein Raum auf der von dem Fluidsteuermittel abgewandten Seite des Magnetpols ist mit der Umgebung des Ventils fluidisch verbunden.

Das erste Federmittel besteht vorzugsweise aus mindestens einer Tellerfeder und ist vorteilhafterweise hinsichtlich seiner Federvorspannung einstellbar, beispielsweise durch das Unterlegen von Scheiben.

Vorteilhafterweise weist der Magnetpol eine dynamische Dichtung auf, die den dritten Druckraum, der von dem Magnetpol begrenzt wird, gegen die Umgebung abdichtet. Ebenfalls vorteilhafterweise ist der dritte Druckraum mit dem zweiten Druckraum durch eine Abflachung oder eine Nut an dem Anker fluidisch verbunden. Damit wird der zweite Druckraum indirekt geschützt, weil Fluid von dem zweiten Druckraum in den geschützten dritten Druckraum übertreten kann.

Ebenfalls vorteilhafterweise enthält das Fluidsteuermittel einen Ventilsitz und einen darin zeitweise ruhenden Dichtkörper, wobei der Dichtkörper kraft-oder form- oder stoffschlüssig mit dem Anker verbunden ist.

In einer vorteilhaften Ausführung öffnet bei einer Druckdifferenz zwischen dem ersten Druckraum und dem dritten Druckraum, die höher ist als ein vorbestimmter Grenzwert Δ_{pg2}, die Druckdifferenz das Fluidsteuermittel gegen die auf den Anker wirkende Kraft eines zweiten Rückstellfedermittels, so dass das Fluid in den benachbarten zweiten Druckraum abfließen kann. Der Grenzwert Δ_{pg2} ist durch die Vorspannung des zweiten Rückstellfedermittels so eingestellt, dass die Kraft des Elektromagneten diesen Grenzwert überwinden kann, um das Ventil gesteuert zu öffnen. Bei einem Einfrieren des Fluids im ersten Druckraum entsteht ein so hoher Druck, dass die Kraft des zweiten Rückstellfedermittels jedenfalls überwunden wird.

Erfindungsgemäß weist das Ventil eine weitere Schutzeinrichtung auf. Dabei ist der hohlzylindrische dritte Druckraum des Ventils innen an der Zylinderfläche mit einer Membran ausgekleidet, die von einer Abstützung mindestens teilweise umfasst ist, wobei die Abstützung aus einem hohlzylindrischen Körper besteht, der in dem Elektromagneten gelagert ist.

Vorteilhafterweise ist die Abstützung in einer Kunststoffumspritzung einer Magnetspule gelagert, wobei die Kunststoffumspritzung und die Magnetspule Teile des Elektromagneten sind. Dabei kann die Abstützung auch stoffschlüssig mit der Kunststoffumspritzung verbunden sein.

Die Abstützung weist auf ihrer der Membran zugewandten Oberfläche eine Mehrzahl von Vertiefungen und zwischen den Vertiefungen eine entsprechende Zahl von Rippen auf, die die Membran abstützen. Bei einer Erhöhung des Drucks in dem dritten Druckraum wird die Membran stellenweise in die Vertiefungen gedrückt und das Volumen des dritten Druckraums wird dadurch vergrößert.

Die Rippen und die Vertiefungen sind so bemessen, dass die Membran sich nur elastisch verformt, wenn sie sich unter dem Einfluss des Innendrucks an die Vertiefungen anlegt.

Dabei verlaufen die Rippen entweder axial relativ zu dem dritten Druckraum, oder sie verlaufen umlaufend relativ zu dem dritten Druckraum. Die Membran dichtet den dritten Druckraum gegen die Umgebung ab, und die ebenfalls axial oder umlaufend verlaufenden Vertiefungen sind miteinander und mit der Umgebung außerhalb des Gehäuses fluidisch verbunden.

Die Membran ist vorzugsweise hinsichtlich ihrer Dicke und ihrer Steifigkeit so ausgelegt, dass sie bei einer Druckerhöhung in dem Druckraum, den sie umfasst, in die Vertiefungen elastisch eindringt und bei einer späteren Absenkung des Drucks wieder die Form annimmt, die sie vor der Druckerhöhung hatte. Wegen der nur elastischen Verformung kann die Membran eine große Zahl von Einfrierzyklen ertragen.

Weitere Einzelheiten, Merkmale und Vorteile der Erfindung ergeben sich aus nachfolgender Beschreibung anhand der Zeichnung.

### Es zeigt:

- Figur 1: eine Darstellung des Ventils im Längsschnitt mit einem verschieblichen Magnetpol als Schutzeinrichtung ohne die erfindungsgemäße Membran als Schutzeinrichtung,
- Figur 2: eine Darstellung des Ventils im Längsschnitt mit einer Membran als Schutzeinrichtung, der verschiebliche Magnetpol als Schutzeinrichtung wird hier nicht gezeigt,
- Figur 3: eine Schnittdarstellung senkrecht zur Mittelachse, gezeigt ist nur die Membran ohne Druckbeaufschlagung und ihre Abstützung durch Rippen,
- Figur 4: eine weitere Schnittdarstellung senkrecht zur Mittelachse der in die Vertiefungen eingedrungene Membran mit Druckbeaufschlagung,

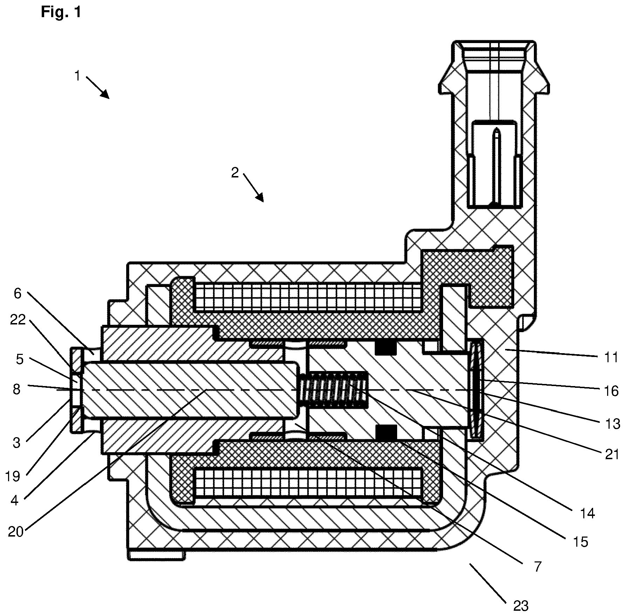

Figur 1 zeigt eine Ausführung des Ventils (1), das einen Elektromagneten (2), einen Einlass (3), einen Auslass (4), ein Gehäuse (11) und ein von einem Anker (20) des Elektromagneten (2) mechanisch betätigtes Fluidsteuermittel (8) aufweist.

Das Fluidsteuermittel (8) verbindet einen ersten, mit dem Einlass (3) fluidisch verbundenen Druckraum (5) mit einem zweiten, mit dem Auslass (4) fluidisch verbundenen Druckraum (6) in Abhängigkeit von der Betätigung durch den Anker (20) des Elektromagneten (2).

Der Elektromagnet (2) weist einen Magnetpol (21) auf, der von einem ersten Federmittel (13) axial abgestützt ist, wobei der Magnetpol (21) durch einen Druck in dem dritten Druckraum (7), der größer ist als ein erster vorbestimmter Grenzdruck p_{g}, gegen die Kraft des ersten Federmittels (13) in die Richtung des ersten Federmittels (13) verschiebbar ist.

Das erste Federmittel (13) ist an dem Gehäuse (11) abgestützt, und ein Raum (16) auf der von dem Fluidsteuermittel (8) abgewandten Seite des Magnetpols (21) ist mit der Umgebung (23) des Ventils (1) fluidisch verbunden.

Das erste Federmittel (13) besteht gemäß Fig. 1 aus zwei Tellerfedern, die in nicht dargestellter Weise durch Unterlegscheiben hinsichtlich ihrer Federvorspannung einstellbar sein können.

Der Magnetpol (21) weist eine dynamische Dichtung (15) auf, die den dritten Druckraum (7), der von dem Magnetpol (21) einseitig begrenzt wird, gegen die Umgebung (23) abdichtet.

Das Fluidsteuermittel (8) enthält einen Ventilsitz (19) und einen darin zeitweise ruhenden Dichtkörper (22), wobei der Dichtkörper (22) kraft- oder form- oder stoffschlüssig mit dem Anker (20) verbunden ist.

Der dritte in dem Elektromagneten (2) enthaltene Druckraum (7) ist mit dem zweiten Druckraum (6) durch eine Abflachung (28) an dem Anker (20) fluidisch verbunden.

Bei einer Druckdifferenz zwischen dem ersten Druckraum (5) und dem dritten Druckraum (7), die höher ist als ein vorbestimmter Grenzwert Δ_{pg2}, ist das Fluidsteuermittel (8) durch die genannte Druckdifferenz gegen die Kraft eines auf den Anker (20) wirkenden zweiten Federmittels (14) öffenbar, so dass das Fluid aus dem ersten Druckraum (5) in den zweiten Druckraum (6) abfließen kann.

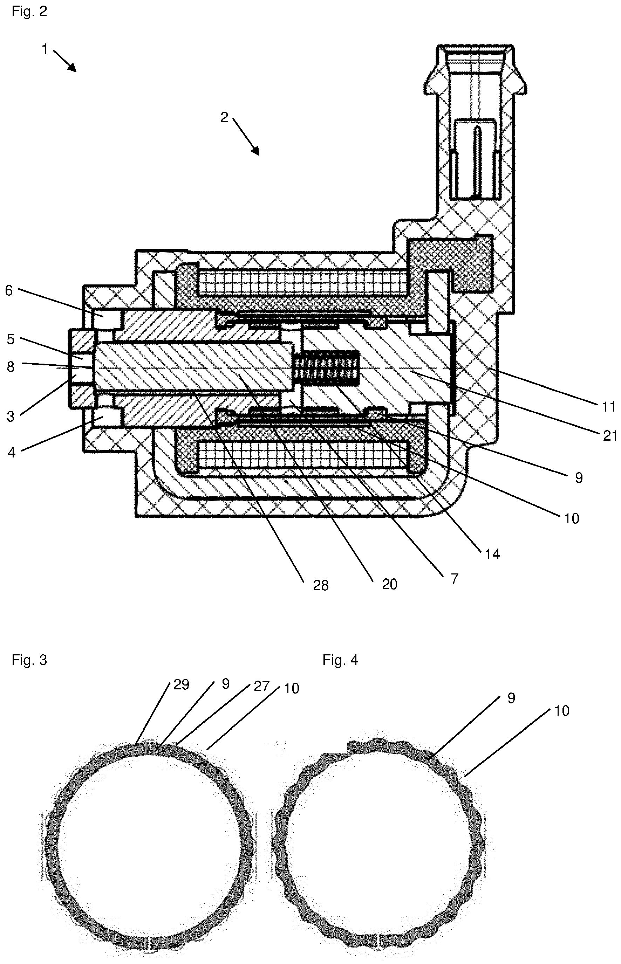

Der Elektromagnet (2) in der Ausführung gemäß Fig. 2 weist einen dritten Druckraum (7) auf, der hohlzylindrisch ist und der innen an der Zylinderfläche mit einer Membran (9) ausgekleidet ist, die von einer Abstützung (10) mindestens teilweise umfasst ist.

Die Abstützung (10) ist in dem Elektromagneten (2) gelagert und weist Vertiefungen (27) gemäß Fig. 3 und Fig. 4 auf, die von der Membran (9) druckabhängig elastisch ausfüllbar sind.

Die Lagerung der Abstützung erfolgt vorzugsweise in einer Kunststoffumspritzung einer Magnetspule, wobei beides Teile des Elektromagneten (2) sind.

Gemäß Fig. 3 und Fig. 4 weist die Abstützung (10) zwischen den Vertiefungen (27) Rippen (29) auf, die in axialer Richtung relativ zu dem dritten Druckraum (7) verlaufen. Die ebenfalls axial verlaufenden Vertiefungen (27) sind miteinander und mit der Umgebung (23) außerhalb des Gehäuses (11) fluidisch verbunden, wobei die Membran (9) den dritten Druckraum (7) gegen die Umgebung (23) abdichtet.

Dabei zeigt Fig. 4 das Eindringen der Membran (9) in die Vertiefungen (27) der Abstützung (10) unter der Wirkung eines hohen Drucks im dritten Druckraum (7).

In dieser Ausführung sind die Membran (9) und die Abstützung (10) so ausgelegt, dass auch bei dem höchsten erwartbaren Druck im Fluid des dritten Druckraums (7) die Membran (9) und die Abstützung (10) nur elastisch verformt werden.

Die Membran (9) und die Abstützung (10) werden in Fig. 1 nicht gezeigt.

Die vorhergehende Beschreibung gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen.

### Bezugszeichenliste

- 1: Ventil
- 2: Elektromagnet
- 3: Einlass
- 4: Auslass
- 5: Erster Druckraum
- 6: Zweiter Druckraum
- 7: Dritter Druckraum
- 8: Fluidsteuermittel
- 9: Membran
- 10: Abstützung
- 11: Gehäuse
- 13: Federmittel
- 14: Federmittel
- 15: Dichtung
- 16: Raum
- 19: Ventilsitz
- 20: Anker
- 21: Magnetpol
- 22: Dichtkörper
- 23: Umgebung
- 27: Vertiefung
- 28: Abflachung
- 29: Rippe

## Patentansprüche

1. Ventil (1), aufweisend einen Elektromagneten (2), einen Einlass (3), einen Auslass (4), ein Gehäuse (11) und ein von einem Anker (20) des Elektromagneten (2) betätigtes Fluidsteuermittel (8), das einen, mit dem Einlass (3) fluidisch verbundenen ersten Druckraum (5) mit einem zweiten, mit dem Auslass (4) fluidisch verbundenen Druckraum (6) in Abhängigkeit von der Betätigung durch den Anker (20) des Elektromagneten (2) fluidisch verbindet, wobei der Elektromagnet (2) einen dritten Druckraum (7) aufweist, wobei
der Elektromagnet (2) einen Magnetpol (21) aufweist, der mit dem Anker (20) magnetisch zusammenwirkt und den dritten Druckraum (7) einseitig begrenzt, wobei der Magnetpol (21) von einem ersten Federmittel (13) axial abgestützt ist, und wobei der Magnetpol (21) durch einen Druck in dem dritten Druckraum (7), der größer ist als ein erster vorbestimmter Grenzdruck p_{g}, gegen die Kraft des ersten Federmittels (13) in die Richtung des ersten Federmittels (13) verschiebbar ist, **dadurch gekennzeichnet, dass** der dritte Druckraum (7) zylindrisch ist und innen an der Zylinderfläche mit einer Membran (9) ausgekleidet ist, die von einer Abstützung (10) mindestens teilweise umfasst ist, wobei die Abstützung (10) in dem Gehäuse (11) gelagert ist, und wobei die Abstützung (10) an seiner der Membran (9) zugewandten Oberfläche Vertiefungen (27) aufweist, die von der Membran (9) druckabhängig elastisch ausfüllbar sind.

2. Ventil (1) nach Anspruch 1, **dadurch gekennzeichnet, dass** das erste Federmittel (13) an dem Gehäuse (11) abgestützt ist, wobei ein Raum (16) auf der von dem Fluidsteuermittel (8) abgewandten Seite des Magnetpols (21) mit der Umgebung (23) des Ventils (1) fluidisch verbunden ist.

3. Ventil (1) nach einem der vorstehenden Ansprüche, **dadurch gekennzeichnet, dass** das erste Federmittel (13) aus mindestens einer Tellerfeder besteht.

4. Ventil (1) nach einem der vorstehenden Ansprüche, **dadurch gekennzeichnet, dass** das erste Federmittel (13) hinsichtlich seiner Federvorspannung einstellbar ist.

5. Ventil (1) nach einem der vorstehenden Ansprüche, **dadurch gekennzeichnet, dass** der dritte in dem Elektromagneten (2) enthaltene Druckraum (7) mit dem zweiten Druckraum (6) durch eine Abflachung (28) oder eine Nut am Anker (20) fluidisch verbunden ist.

6. Ventil (1) nach einem der vorstehenden Ansprüche, **dadurch gekennzeichnet, dass** bei einer Druckdifferenz zwischen dem ersten Druckraum (5) und dem dritten Druckraum (7), die höher ist als ein zweiter vorbestimmter Grenzwert Δ_{pg2}, das Fluidsteuermittel (8) durch die genannte Druckdifferenz gegen die Kraft eines zweiten Federmittels (14) öffenbar ist, so dass das Fluid von dem ersten Druckraum (5) in den zweiten Druckraum (6) abfließen kann.

7. Ventil (1) nach einem der vorstehenden Ansprüche, **dadurch gekennzeichnet, dass** der Magnetpol (21) eine dynamische Dichtung (15) aufweist, die den dritten Druckraum (7), der von dem Magnetpol (21) einseitig begrenzt wird, gegen die Umgebung (23) abdichtet.

8. Ventil (1) nach einem der vorstehenden Ansprüche, **dadurch gekennzeichnet, dass** das Fluidsteuermittel (8) einen Ventilsitz (19) und einen darin zeitweise ruhenden Dichtkörper (22) enthält, wobei der Dichtkörper (22) kraft- oder form- oder stoffschlüssig mit dem Anker (20) verbunden ist.

## Claims

1. A valve (1), having an electromagnet (2), an inlet (3), an outlet (4), a housing (11) and a fluid control means (8) actuated by an anchor (20) of the electromagnet (2), which fluidically connects a first pressure chamber (5) fluidically connected to the inlet (3) to a second pressure chamber (6) fluidically connected to the outlet (4) depending on an actuation by the anchor (20) of the electromagnet (2), wherein the electromagnet (2) has a third pressure chamber (7), wherein the electromagnet (2) has a magnetic pole (21), which magnetically interacts with the anchor (20) and which limits the third pressure chamber (7) on one side, wherein the magnetic pole (21) is axially supported by a first spring means (13), and wherein the magnetic pole (21) is displaceable by a pressure in the third pressure chamber (7) which is greater than a first predetermined pressure limit p_{g}, against the force of the first spring means (13) in the direction of the first spring means (13), **characterized in that** the third pressure chamber (7) is cylindrical and is lined inside on the cylinder surface with a diaphragm (9) which is at least partially comprised by a support (10), wherein the support (10) is mounted in the housing (11), and wherein the support (10) has depressions (27) on its surface facing the diaphragm (9), which are pressure-dependently elastically fillable by the diaphragm (9).

2. The valve (1) according to claim 1, **characterized in that** the first spring means (13) is supported on the housing (11), wherein a chamber (16) on the side of the magnetic pole (21) averted from the fluid control means (8) is fluidically connected to the surroundings (23) of the valve (1).

3. The valve (1) according to any of the preceding claims, **characterized in that** the first spring means (13) consists of at least one disk spring.

4. The valve (1) according to any of the preceding claims, **characterized in that** the first spring means (13) is adjustable with respect to its spring preload.

5. The valve (1) according to any of the preceding claims, **characterized in that** the third pressure chamber (7) contained in the electromagnet (2) is fluidically connected to the second pressure chamber (6) by a flat section (28) or a groove on the anchor (20).

6. The valve (1) according to any of the preceding claims, characterized that in the case of a pressure difference between the first pressure chamber (5) and the third pressure chamber (7), which is higher than a second predetermined limit value Δ_{pg2}, the fluid control means (8) can be opened by the mentioned pressure difference against the force of a second spring means (14), so that the fluid can flow from the first pressure chamber (5) into the second pressure chamber (6).

7. The valve (1) according to any of the preceding claims, **characterized in that** the magnetic pole (21) has a dynamic seal (15) which seals the third pressure chamber (7), which is limited on one side by the magnetic pole (21), against the surroundings (23).

8. The valve (1) according to any of the preceding claims, **characterized in that** the fluid control means (8) has a valve seat (19) and a sealing body (22) sometimes resting therein, wherein the sealing body (22) is connected to the anchor (20) in a force-fitting or form-fitting or material-fitting manner.

## Revendications

1. Soupape (1), présentant un électroaimant (2), une entrée (3), une sortie (4), un carter (11) et un moyen de commande de fluide (8), actionné par un induit (20) de l'électroaimant (2), qui relie fluidiquement une première chambre de pression (5) en liaison fluidique avec l'entrée (3) à une deuxième chambre de pression (6) en liaison fluidique avec la sortie (4) en fonction de l'actionnement par l'induit (20) de l'électroaimant (2), dans laquelle l'électroaimant (2) présente une troisième chambre de pression (7), dans laquelle l'électroaimant (2) présente un pôle magnétique (21) qui coopère magnétiquement avec l'induit (20) et délimite unilatéralement la troisième chambre de pression (7), dans laquelle le pôle magnétique (21) est soutenu axialement par un premier moyen formant ressort (13), et dans laquelle le pôle magnétique (21) peut être déplacé dans la troisième chambre de pression (7) par une pression qui est supérieure à une première pression limite p_{g} pouvant être prédéfinie, à l'encontre de la force du premier moyen formant ressort (13) dans la direction du premier moyen formant ressort (13), **caractérisée en ce que** la troisième chambre de pression (7) est cylindrique et est revêtue à l'intérieur sur la surface cylindrique d'une membrane (9), qui est entourée au moins en partie par un appui (10), dans laquelle l'appui (10) est monté dans le carter (11), et dans laquelle l'appui (10) présente sur sa surface tournée vers la membrane (9) des évidements (27) qui peuvent être remplis de manière élastique par la membrane (9) en fonction de la pression.

2. Soupape (1) selon la revendication 1, **caractérisée en ce que** le premier moyen formant ressort (13) est en appui sur le carter (11), dans laquelle un espace (16) sur la face du pôle magnétique (21) opposée au moyen de commande de fluide (8) est en liaison fluidique avec l'environnement (23) de la soupape (1).

3. Soupape (1) selon l'une quelconque des revendications précédentes, **caractérisée en ce que** le premier moyen formant ressort (13) est constitué d'au moins une rondelle Belleville.

4. Soupape (1) selon l'une quelconque des revendications précédentes, **caractérisée en ce que** le premier moyen formant ressort (13) peut être réglé en ce qui concerne sa précontrainte de ressort.

5. Soupape (1) selon l'une quelconque des revendications précédentes, **caractérisée en ce que** la troisième chambre de pression (7) contenue dans l'électroaimant (2) est en liaison fluidique avec la deuxième chambre de pression (6) par un méplat (28) ou une rainure sur l'induit (20).

6. Soupape (1) selon l'une quelconque des revendications précédentes, **caractérisée en ce que**, lors d'une différence de pression entre la première chambre de pression (5) et la troisième chambre de pression (7) qui est supérieure à une deuxième valeur limite Δ_{pg2} prédéfinie, le moyen de commande de fluide (8) peut être ouvert par ladite différence de pression à l'encontre de la force d'un deuxième moyen formant ressort (14), de sorte que le fluide peut s'écouler à partir de la première chambre de pression (5) dans la deuxième chambre de pression (6).

7. Soupape (1) selon l'une quelconque des revendications précédentes, **caractérisée en ce que** le pôle magnétique (21) présente un joint (15) dynamique, qui étanchéifie par rapport à l'environnement (23) la troisième chambre de pression (7), qui est délimitée unilatéralement par le pôle magnétique (21).

8. Soupape (1) selon l'une quelconque des revendications précédentes, **caractérisée en ce que** le moyen de commande de fluide (8) contient un siège de soupape (19) et un corps d'étanchéité (22) reposant par intermittence dans celui-ci, dans laquelle le corps d'étanchéité (22) est relié à force ou par complémentarité de formes ou par liaison de matière à l'induit (20).
